# FASCICULE DE BREVET EUROPEEN

(11) **EP 2 087 550 B1**
(45) Date de publication et mention de la délivrance du brevet: **14.10.2015**
(21) Numéro de dépôt: 07866546.0
(22) Date de dépôt: 29.11.2007
(51) Int. Cl.: H01Q 1/32, B32B 17/10

(54) **VITRE FEUILLETEE AVEC UN DISPOSITIF DE FIXATION INTRODUIT DANS UN ORIFICE DE PASSAGE POUR DES OBJETS**
LAMINIERTES GLAS MIT EINER FIXIEREINRICHTUNG FÜR OBJEKTE IN EINER OEFFNUNG.
LAMINATED GLASS COMPRISING A FIXATION DEVICE INTRODUCED IN A PORTHOLE FOR OBJECTS

(30) Priorité: 30.11.2006 DE 102006056501
(43) Date de publication de la demande: 12.08.2009
(73) Titulaire: Saint-Gobain Glass France, 92400 Courbevoie (FR)
(72) Inventeur: LABROT, Michael, 52072 Aachen (DE); ZIEGLER, Stefan, 52062 Aachen (DE); SCHMIDT, Lothar, 52074 Aachen (DE); MELCHER, Martin, 52134 Herzogenrath (DE)
(74) Mandataire: Cardin, Elise
(86) Numéro de dépôt international: PCT/FR2007/052418
(87) Numéro de publication internationale: WO 2008/065310

(56) Documents cités:
- WO-A-2004/086556
- DE-C1- 4 311 442
- DE-U1-202005 003 549
- FR-A- 2 662 398
- FR-A- 2 732 730
- JP-A- 2004 166 202

## Description

La présente invention concerne une vitre feuilletée avec un dispositif de fixation introduit dans un orifice de passage pour des objets avec les caractéristiques du préambule de la revendication 1. On attire particulièrement l'attention sur une fixation d'une antenne dans un orifice de passage situé dans une fenêtre de véhicule automobile ou un toit vitré.

De nombreuses formes de réalisation de vitres antennes dans une réalisation monolithique ou feuilletée sont connues, dans lesquelles des structures d'antenne sont disposées directement à la surface vitrée ou à l'intérieur du feuilletage de verre. La présente invention traite cependant, comme application privilégiée, des antennes à monter séparément sur la vitre.

Il s'entend toutefois que la présente invention peut être utilisée non seulement sur des vitres feuilletées de véhicule automobile mais également sur celles utilisées dans le bâtiment. Il ne s'agit pas de fixer la vitre elle-même sur une structure mais d'utiliser la vitre elle-même munie d'un orifice de passage comme support pour un objet se fixant dessus.

Il est également connu en soi de fixer des objets comme par exemple des rétroviseurs (DE 35 09 531 C1), des antennes et/ou des capteurs sur des vitres par collage sur une de leurs surfaces principales, sans que l'on ait besoin à cet effet d'un forage.

Le document DE 30 20 253 A1 décrit une fixation d'antenne (n'appartenant pas au genre) dans un pare-brise monolithique de véhicule automobile. Celui-ci a un orifice, dans lequel un élément porteur pour l'antenne est introduit de manière amovible. L'élément porteur a une partie tige s'adaptant dans l'orifice et un col, qui est plus grand que le diamètre de l'orifice. Ce col s'appuie contre une des faces en surface du pare-brise par l'intermédiaire d'une couche intermédiaire formant étanchéité. L'élément porteur est fixé au moyen d'une vis vissée de l'autre côté du pare-brise dans sa partie tige par l'intermédiaire d'une pièce à contre-support, la partie à contre-support s'appuyant également par l'intermédiaire d'une couche intermédiaire formant étanchéité contre la face en surface du pare-brise, opposée à l'élément porteur. Elle sert en même temps de pied pour un rétroviseur intérieur.

Le document DE 10 2004 011 662 A1 présente une fixation d'antenne sur une vitre de toit d'un véhicule automobile. La vitre de toit (monolithique) est munie, au point de montage de l'antenne, d'un forage, dans lequel l'antenne est introduite. Au même point, une plaque de métal avec un forage correspondant en dessous du toit vitré est toutefois prévue par nécessité de fonctionnement, plaque qui doit mettre à disposition un potentiel à la masse pour l'antenne. L'antenne est introduite dans les forages et vissée, un joint entre le corps d'antenne et le verre arrivant à se placer sur la surface vitrée située à l'extérieur.

Cet enseignement ne peut être utilisé que de façon limitée sur une antenne introduite dans une vitre à proprement parler. Elle ne concerne pas non plus les vitres feuilletées bien que celles-ci sont normalement utilisées sur des toits vitrés de véhicules automobiles comme sur des pare-brise.

Le document DE 43 11 442 C1 décrit un procédé pour la fixation par vissage d'un élément de fixation ou de maintien sur une vitre feuilletée correspondante, avec lequel l'élément de maintien est introduit dans un forage traversant les deux vitres du feuilletage. Le procédé connu tient compte du problème que la couche entre le feuilletage ou la couche d'adhésif ne doive pas être sollicitée par la pression du serrage d'une vis, car elle pourrait occasionner alors finalement un relâchement de la fixation. Les deux vitres sont munies à cet effet de forages de grandeur différente, qui sont placées de manière excentrique l'une par rapport à l'autre dans le feuilletage. Pour décharger la couche d'adhésif du feuilletage, l'espace entre les parties de fixation introduites dans ce forage avec dimension inférieure et les parois de l'orifice est rempli d'une matière plastique thermodurcissable, qui doit recevoir les forces de tension du vissage. Grâce à l'excentricité des deux orifices, l'élément de maintien est protégé de surcroît contre la torsion. Selon cette publication, les deux parties du dispositif de fixation s'appuient également sur les surfaces extérieures des deux vitres rigides du feuilletage.

Le document DE 44 04, 165 C1 décrit un procédé pour augmenter des contraintes de compression dans la zone d'un forage dans une vitre monolithique précontrainte dans sa totalité, avec lequel, pendant le procédé de précontrainte de contact, un moyen de refroidissement est amené de surcroît dans le trou de forage. De cette manière, la zone des parois de l'orifice est précontrainte de manière ciblée par procédé thermique.

La présente invention a pour objectif, en partant de la vitre feuilletée connue du document DE 43 11 442 C1, de créer une autre vitre feuilletée avec un dispositif de fixation introduit dans un orifice de passage pour des objets, avec laquelle une sollicitation de la couche intermédiaire est évitée.

Cet objectif est atteint selon la présente invention par les caractéristiques de la revendication 1. Les caractéristiques des sous revendications indiquent des perfectionnements avantageux de cette invention.

Selon l'invention, le dispositif de fixation est donc fixé seulement ou sensiblement sur la vitre avec le forage plus petit, alors que la seconde vitre rigide en verre ou en matière plastique reste non sollicitée par la contrainte de vissage. On exclut ainsi également une sollicitation démesurée de la couche intermédiaire ou de la couche d'adhésif. En outre, après un traitement thermique dans la zone des surfaces de bordure de cet orifice plus petit, on assiste à une contrainte de compression accrue par rapport au reste de surface de la vitre, laquelle contrainte de compression rend plus résistante à cet endroit davantage sollicité un verre non précontraint.

Des essais ont montré que cette contrainte de compression accrue peut être atteinte assez facilement et sans beaucoup de moyens par le fait que, lors de l'utilisation de deux vitres pour le feuilletage, celles-ci sont munies avant un traitement thermique (cintrage) d'orifices de tailles différentes. Sur des vitres feuilletées, ce traitement thermique (en particulier pour le cintrage des vitres dans une forme souhaitée) est entrepris de manière connue en règle générale avec des vitres placées les unes sur les autres, afin que leur courbure soit la plus uniforme possible et que des écarts de forme, qui pourraient conduire lors de l'assemblage suivant à des problèmes allant jusqu'à la rupture, soient largement exclus.

Au cours du refroidissement suivant des vitres à partir de leur température de ramollissement, la zone de bordure non recouverte par la seconde vitre, du forage plus petit se refroidit d'elle-même un peu plus vite que le reste de cette vitre et obtient simplement de ce fait une précontrainte de compression accrue également souhaitée dans ce cas.

Évidemment, il est également possible d'entraîner de manière ciblée une telle contrainte de compression accrue dans la zone des parois de l'orifice plus petit d'une autre façon, par exemple de manière analogue au procédé déjà évoqué du document DE 44 04 185 C1. Il faut naturellement renoncer à une précontrainte totale de la vitre lorsque cela apparaît non souhaitable pour d'autres raisons.

Lors des essais évoqués, des contraintes de compression en bordure typiques d'environ 20 MPa sur le petit forage et de 10 MPa sur le grand forage par exemple ont été trouvées. On a également constaté grâce à des simulations que, pour une charge mécanique, l'arête du petit forage est soumise à une sollicitation plus importante, cela tombe alors bien qu'ici aussi la contrainte de compression en bordure soit plus importante. En même temps, des contraintes de traction de compensation se règlent certes un peu plus loin de la bordure de forage, lesquelles contraintes peuvent être toutefois maîtrisées. Ces zones soumises à une contrainte de traction sont avant tout sensibles à des dommages en surface, auxquels il ne faut pas s'attendre toutefois dans cet environnement spécial de montage.

On peut précontraindre par procédé thermique au moins la vitre avec le petit forage évidemment d'une manière connue en soi (verre trempé ESG) ou la précontraindre partiellement (verre partiellement précontraint ; TVG).

Les parties extérieures comme les antennes sur les vitres de véhicules automobiles sont exposées à des forces partielles considérables (vent). Des charges mécaniques également, par exemple lors de l'enlèvement d'une antenne-fouet avant de traverser une station de nettoyage (ou même un non enlèvement avant la station de nettoyage), sans parler même de vandalisme ne sont pas à exclure. On peut obtenir une minimisation des dommages grâce à une stabilité élevée de la vitre en tant que telle dans la zone de l'orifice.

Dans une variante de la présente invention, le dispositif de fixation comprend encore une pièce d'appui supplémentaire, avec laquelle également la seconde vitre rigide est utilisée pour soutenir le dispositif de fixation contre les forces en action (en particulier les forces de flexion). Cette pièce d'appui élargit la base, contre laquelle le dispositif de fixation peut s'appuyer lorsque des forces entrent en action. Elle est toutefois, de manière privilégiée, contrainte à son tour principalement sur la vitre avec l'orifice plus petit, et éventuellement collée à l'autre vitre rigide dans la zone de bordure du forage plus important de celle-ci.

Enfin, il existe l'option avantageuse, de prévoir également sur la vitre feuilletée, objet de la présente invention, de manière analogue aux vitres antennes évoquées précédemment avec des structures d'antenne appliquées par pression, pour une antenne introduite dans l'orifice de passage, des circuits électriques sur une des surfaces vitrées, et de préférence à l'intérieur du feuilletage. Ces circuits sous forme de conducteurs filiformes ou de câbles plats imprimés ou discrets ou même sous forme de segments d'un revêtement conducteur électrique s'étendent dans la zone de l'orifice de passage et jusqu'au bord du petit forage évoqué, où ils peuvent contacter l'antenne avec peu de moyen de manière électrique-galvanique et/ou capacitive.

D'autres détails avantageux de l'objet de l'invention résultent des dessins montrant un exemple de réalisation et de la description suivante.

Il est montré dans une représentation simplifiée, qui n'est pas à l'échelle
Figure 1 : une coupe à partir d'une première forme de réalisation d'une vitre feuilletée avec un orifice de passage et un dispositif de fixation introduit,
Figure 2 : une seconde forme de réalisation,également en coupe, sur laquelle le dispositif de fixation de la figure 1 est muni d'une pièce d'appui supplémentaire pour l'élargissement de sa base d'appui.

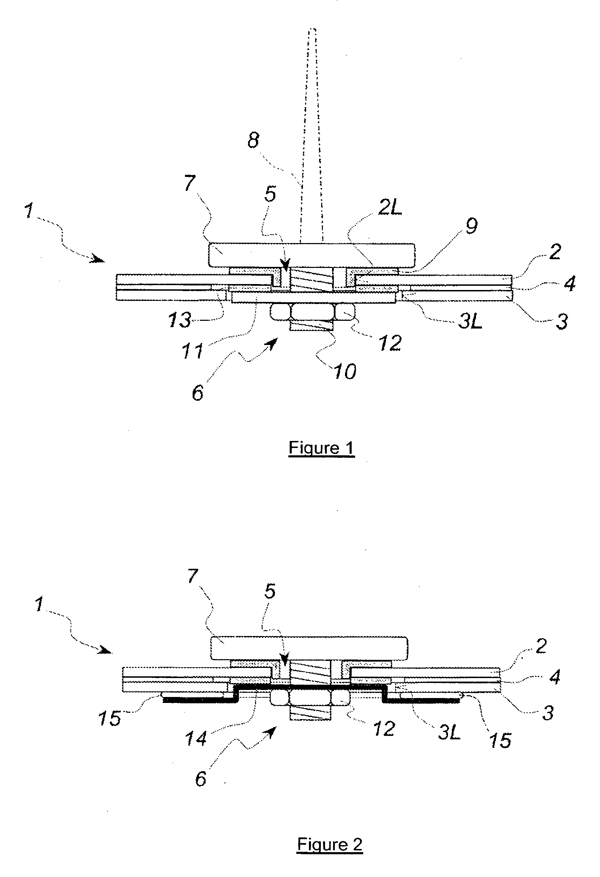

Selon la figure 1, une vitre feuilletée 1 montrée seulement dans une coupe de petite dimension se compose d'une vitre 2 et d'une seconde vitre rigide 3 en verre ou en matière plastique, qui sont reliées l'une à l'autre au moyen d'une couche d'adhésif 4 par adhésion de surface. La vitre 2 a un orifice 2L et la seconde vitre rigide 3 a un orifice 3L, dont le diamètre est plus important que celui de l'orifice 2L.

On peut évoquer par exemple les mesures suivantes. Les deux vitres 2 et 3 sont toutes les deux en verre flotté d'une épaisseur de 2,1 mm, différentes épaisseurs entre les deux vitres étant possibles, et naturellement aussi d'autres dimensions d'épaisseur que celles évoquées.

Les deux orifices ont des diamètres de par exemple 20 et 40 mm ; des écarts ainsi que des différences supérieures ou inférieures dans la différence de diamètre sont, au besoin, possibles sans problème.

La couche d'adhésif 4 (un film en polyvinylebutyral) a été munie dans la zone de l'orifice de passage également d'une coupe, qui est un peu plus grande que le diamètre du plus grand orifice 3L. Les deux orifices 2L et 3L sont alignés de telle sorte que la vitre feuilletée 1 a dans sa totalité un orifice de passage 5, dans lequel un dispositif de fixation 6 est introduit, le plus grand orifice 3L entourant le bord du plus petit au moins de façon à ce que celui-ci soit entouré tout autour des surfaces de bordure de la vitre 2. Dans le présent contexte, il n'y a cependant pas d'orientation coaxiale et exacte et pas non plus d'excentricité certaine des deux orifices 2L et 3L.

Avec la découpe arrière du film d'adhésif 4 relativement large évoquée, on obtient que celle-ci ne soit pas comprimée au cours du processus de feuilletage dans le gabarit intérieur de l'orifice de passage 6.

Le dispositif de fixation 6 a ici une base ou plaque 7, qui sert par exemple à fixer une antenne-fouet 8 indiquée seulement en pointillés sur la vitre feuilletée 1. Dans ce cas, la surface de la vitre 2, située en haut de la figure, est la surface extérieure. La plaque 7 se trouve au-dessus d'une couche intermédiaire formant étanchéité 9 (par exemple en EPDM ou un autre matériau élastique mou imperméable à l'eau) à la surface extérieure de la vitre 2 tout autour de l'orifice 2L avec un certain recouvrement. Elle a un tourillon fileté 10 (par exemple central), qui est introduit dans l'orifice de passage 5. Une rondelle 11 (métallique ou en matière plastique) est poussée au-dessus de ce tourillon fileté 10, laquelle rondelle est tendue contre la vitre 2 au moyen d'un écrou 12 vissé sur le tourillon fileté 10 et également au-dessus d'une couche intermédiaire 13 à partir de l'autre face. Le tourillon fileté 10 peut être creux de façon à ce qu'un câble antenne (non représenté) puisse être passé à travers.

La couche intermédiaire 9 est munie ici d'un col introduit dans l'orifice 2L, qui sert à centrer la couche intermédiaire 9 sur l'orifice 2L et également à empêcher des contacts directs entre l'arête en verre et le tourillon fileté 10. Évidemment, d'autres solutions peuvent également être utilisées, par exemple un manchon en matière plastique entourant le tourillon fileté 10 dans l'orifice 2L (qui pourrait constituer en même temps une limite de serrage des vis) ou similaire.

On voit que le dispositif de fixation 6 et/ou la plaque 7 avec antenne 8 est donc fixé seulement sur la vitre 2. La couche d'adhésif 4 reste entièrement hors contact des forces de contrainte.

On fera encore remarquer que les différentes pièces du dispositif de fixation ont été représentées de manière exagérément grossie par souci de clarté par rapport à l'épaisseur des vitres rigides 2 et 3.

Dans la variante montrée sur la figure 2 du dispositif de fixation 6, la rondelle 11 de la figure 1 est remplacée par une rondelle 14 bombée, dont le diamètre extérieur est sensiblement plus important que celui du plus grand orifice 3L. Le bord extérieur de la rondelle 14 est bombé par rapport à sa zone intérieure de façon à ce qu'elle s'étende jusqu'au-dessus de la surface inférieure de la vitre rigide 3 dans la zone de bordure de l'orifice 3L, alors que la zone intérieure est à son tour tendu avec l'écrou 12 par rapport à la vitre 2.

Dans la zone de couverture entre la rondelle 14 et la vitre rigide 3, est disposée une couche d'adhésif 15, qui entoure de manière circulaire l'orifice 3L. Au cours du montage du dispositif de fixation 6 dans l'orifice de passage, cette couche d'adhésif 15 est appliquée seulement un peu avant l'application de la rondelle 14 et du vissage de l'écrou sur la vitre rigide 3. Elle se déforme et amortit en même temps l'action des forces de la rondelle sur la seconde vitre rigide. Le processus de contrainte a ainsi lieu avant la solidification de l'adhésif éventuellement à élasticité durable, par exemple du polyuréthane. Cela présente l'avantage de ne pas avoir à attendre cette solidification. La couche d'adhésif constitue cependant ultérieurement une base fixe pour l'appui de forces entrant en action sur le dispositif de fixation 6 (et/ou sur l'antenne 8) sur la seconde vitre rigide, sans que l'on ait à craindre une sollicitation excessive locale de la couche d'adhésif du feuilletage 4 ou du bord de l'orifice 2L.

Il n'est pas absolument nécessaire que la rondelle 14 soit totalement en forme de plateau ; on pourrait réduire sa zone extérieure également à une pluralité d'avancées ou d'empâtements dans la mesure où ceux-ci. sont esthétiquement acceptables. La couche d'adhésif 15 doit alors naturellement être modifiée en correspondance à différents points d'adhésion.

On masquera à la vue néanmoins la partie intérieure (tournée vers l'habitacle du véhicule automobile) du dispositif de fixation par un revêtement. Le câble d'antenne, qui ne doit pas être ouvertement accessible, doit éventuellement être passé. Des alternatives seront décrites ultérieurement à cet effet.

Au besoin, la couche d'adhésif 15 peut être masquée à la vue au moyen d'une couche de couleur opaque. Cette couche de couleur peut être appliquée sur n'importe quelle surface de la vitre rigide tout autour de l'orifice de passage, on prévoira cependant de manière privilégiée l'application sur une surface située à l'intérieur du feuilletage. Elle est prévue mieux encore sur la même surface de vitre 2, que celle où s'appuie à l'intérieur le dispositif de fixation. Une telle couche de couleur protège également la couche d'adhésif contre les rayons UV et ainsi contre la fragilisation.

Les figures ne représentent pas en détail la façon dont une antenne introduite dans l'orifice de passage est contactée électriquement. Il appartient toutefois d'imprimer au moins un circuit correspondant pour le signal d'antenne, sur des antennes actives éventuellement aussi d'autres circuits pour une alimentation en tension de manière connue en soi sur une des surfaces des vitres puis de les contacter dans la zone d'orifice de passage de manière appropriée (par exemple au moyen de ponts courts en fils, de contacts à ressort etc.). On prévoira de préférence de tels circuits imprimés à la surface située à l'intérieur du feuilletage de la vitre 2 avec le plus petit orifice 2L car ils se situent alors sur le même plan que les parties intérieures de la fixation d'antenne. Des conceptions de circuits similaires sont connues en soi sur des vitres feuilletées avec des cellules solaires intégrées.

Au lieu d'un circuit imprimé, on pourrait toutefois installer également un câble approprié (en particulier un conducteur plat) dans le feuilletage des vitres et le contacter de manière appropriée. Un revêtement conducteur d'électricité pourrait également être utilisé principalement comme un tel circuit.

Sur toutes les formes de circuits énoncées, un couplage purement capacitif connu en soi d'un signal d'antenne à haute fréquence de l'antenne vers son conducteur par exemple à travers la zone de bordure du plus petit orifice 2L dans la zone du recouvrement de cette zone de bordure par la plaque 7 est possible. Dans ce cas, l'épaisseur de la vitre 2 pourrait constituer le diélectrique de la connexion capacitive.

## Revendications

1. Vitre feuilletée (1) avec un dispositif de fixation introduit dans un orifice de passage (5) pour des objets,
- la vitre feuilletée se composant d'une vitre (2) et d'au moins une autre vitre rigide (3) en verre ou en matière plastique et d'une couche d'adhésif (4) reliant par adhésion de surfaces les deux vitres rigides,
- l'orifice de passage (5) étant constitué de deux orifices de taille différente (2L et 3L) des deux vitres rigides et
- le dispositif de fixation (6) comprenant au moins deux parties introduites dans l'orifice de passage (5), s'appuyant sur des surfaces en bordure de l'orifice de passage (5) situées l'une en face de l'autre, **caractérisée en ce que** les deux parties du dispositif de fixation (6) s'appuient des deux côtés sur les surfaces en bordure, qui entourent le plus petit orifice placé dans la vitre (2), dans la zone des parois de cet orifice plus petit (2L) présentant une contrainte de compression en bordure, accrue par traitement thermique par rapport au reste de la surface de la vitre (2).

2. Vitre feuilletée selon la revendication 1, **caractérisée en ce que** le dispositif de fixation (6) comprend une plaque (7) ainsi qu'une liaison à vis (10, 11, 12 ; 14) traversant l'orifice de passage, avec laquelle la plaque peut être serrée sur une surface de la vitre.

3. Vitre feuilletée selon la revendication 1 ou 2, **caractérisée en ce que** le dispositif de fixation comprend au moins une rondelle (11 ; 14) s'appuyant au moins indirectement sur le bord du plus petit orifice (2L).

4. Vitre feuilletée selon la revendication 3, **caractérisée en ce que** la rondelle (11) peut être placée dans le plus grand orifice (3L) sans contact ni recouvrement avec la seconde vitre rigide.

5. Vitre feuilletée selon la revendication 3, **caractérisée en ce que** la rondelle (11) est bombée et plus grande que le plus grand orifice (3L) et peut s'appuyer en outre contre la surface de la seconde vitre rigide (3).

6. Vitre feuilletée selon la revendication 5, **caractérisée en ce qu'**entre la rondelle (11) et la vitre rigide (3) est prévue une couche d'adhésif (15).

7. Vitre feuilletée selon l'une quelconque des revendications précédentes, **caractérisée en ce que** la contrainte de compression en bordure dans la vitre (2) dans la zone de l'orifice de passage est significativement plus élevée que la contrainte de compression en bordure dans la seconde vitre rigide (3) se composant également de verre.

8. Vitre feuilletée selon la revendication 7, **caractérisée en ce que** la contrainte de compression en bordure autour du plus petit orifice (2L) dans la vitre (2) est environ deux fois plus élevée que la contrainte de compression en bordure autour du plus grand orifice (3L) dans la vitre (3).

9. Vitre feuilletée selon la revendication 7 ou 8, **caractérisée en ce que** les différentes contraintes de compression en bordure évoquées s'élèvent au moins à 8 MPa sur le plus grand orifice est au moins à 15 MPa sur le plus petit orifice.

10. Vitre feuilletée selon la revendication 7 ou 8 ou 9, **caractérisée en ce que** les différentes contraintes de compression en bordure évoquées s'élèvent environ à 10 et/ou 20 MPa.

11. Vitre feuilletée selon l'une quelconque des revendications précédentes, **caractérisée en ce que** le dispositif de fixation (6) est fixé par serrage sur la vitre (2) par l'intermédiaire de couches intermédiaires en élastique mou (9, 13).

12. Vitre feuilletée selon l'une quelconque des revendications précédentes, **caractérisée en ce que** la couche d'adhésif (4) conçue comme film dans la zone de l'orifice de passage a une découpe arrière par rapport au diamètre du plus grand orifice (3L) et, à l'état feuilleté, ne dépasse pas de préférence le diamètre intérieur du plus grand orifice.

13. Vitre feuilletée selon l'une quelconque des revendications précédentes, **caractérisée en ce qu'**au moins autour de l'orifice de passage (5) est prévue une couche de couleur opaque pour masquer à la vue des parties du dispositif de fixation.

14. Vitre feuilletée selon l'une quelconque des revendications précédentes, **caractérisée en ce qu'**au moyen du dispositif de fixation (6) est fixée une antenne (8) sur la vitre feuilletée.

15. Vitre feuilletée selon la revendication 14, **caractérisée en ce que** l'antenne dépasse d'un côté situé à l'extérieur en position de montage de la vitre feuilletée.

16. Vitre feuilletée selon l'une quelconque des revendications précédentes, **caractérisée en ce qu'**elle comprend au moins un circuit électrique pour une antenne (8) introduit au moyen du dispositif de fixation (6) dans l'orifice de passage.

17. Vitre feuilletée selon la revendication 16, **caractérisée en ce que** le circuit imprimé se situe sur une surface de la vitre rigide, située à l'intérieur dans le feuilletage.

18. Vitre feuilletée selon la revendication 16 ou 17, **caractérisée en ce qu'**un circuit sous forme de conducteurs filiformes ou de câbles plats est intégré dans le feuilletage des vitres.

19. Vitre feuilletée selon l'une quelconque des revendications précédentes, **caractérisée en ce qu'**au moins dans la zone de l'orifice de passage, un revêtement est monté sur sa face tournée vers l'habitacle du véhicule automobile.

## Patentansprüche

1. Verbundglasscheibe (1) mit einer Befestigungsvorrichtung, die in eine Durchgangsöffnung (5) für Gegenstände eingeführt ist,
- wobei die Verbundglasscheibe aus einer Scheibe (2) und wenigstens einer weiteren starren Scheibe (3) aus Glas oder aus Kunststoff und einer Haftschicht (4) gebildet ist, welche die zwei starren Scheiben durch Oberflächenhaftung verbindet,
- wobei die Durchgangsöffnung (5) von zwei Öffnungen unterschiedlicher Größe (2L und 3L) der zwei starren Scheiben gebildet ist, und
- wobei die Befestigungsvorrichtung (6) wenigstens zwei Teile umfasst, die in die Durchgangsöffnung (5) eingeführt sind und sich auf Oberflächen am Rand der Durchgangsöffnung (5), die einander zugewandt sind, abstützen, **dadurch gekennzeichnet, dass** die zwei Teile der Befestigungsvorrichtung (6) sich auf beiden Seiten auf den Oberflächen am Rand abstützen, welche die kleinste in der Scheibe (2) angeordnete Öffnung umgeben, in der Zone der Wände dieser kleinsten Öffnung (2L), die eine Druckspannung am Rand aufweist, die durch Wärmebehandlung gegenüber der übrigen Oberfläche der Scheibe (2) erhöht ist.

2. Verbundglasscheibe nach Anspruch 1, **dadurch gekennzeichnet, dass** die Befestigungsvorrichtung (6) eine Platte (7) sowie eine Schraubverbindung (10, 11, 12; 14) umfasst, welche die Durchgangsöffnung durchquert, mit der die Platte auf einer Oberfläche der Scheibe festgespannt werden kann.

3. Verbundglasscheibe nach Anspruch 1 oder 2, **dadurch gekennzeichnet, dass** die Befestigungsvorrichtung wenigstens eine Unterlegscheibe (11; 14) umfasst, die sich wenigstens indirekt auf dem Rand der kleinsten Öffnung (2L) abstützt.

4. Verbundglasscheibe nach Anspruch 3, **dadurch gekennzeichnet, dass** die Unterlegscheibe (11) in der größten Öffnung (3L) weder in Kontakt noch in Überdeckung mit der zweiten starren Scheibe angeordnet werden kann.

5. Verbundglasscheibe nach Anspruch 3, **dadurch gekennzeichnet, dass** die Unterlegscheibe (11) gewölbt und größer als die größte Öffnung (3L) ist und sich ferner gegen die Oberfläche der zweiten starren Scheibe (3) abstützen kann.

6. Verbundglasscheibe nach Anspruch 5, **dadurch gekennzeichnet, dass** zwischen der Unterlegscheibe (11) und der starren Scheibe (3) eine Haftschicht (15) vorgesehen ist.

7. Verbundglasscheibe nach einem der vorhergehenden Ansprüche, **dadurch gekennzeichnet, dass** die Druckspannung in der Scheibe (2) in der Zone der Durchgangsöffnung deutlich höher ist als die Druckspannung am Rand in der zweiten starren Scheibe (3), die auch aus Glas besteht.

8. Verbundglasscheibe nach Anspruch 7, **dadurch gekennzeichnet, dass** die Druckspannung am Rand um die kleinste Öffnung (2L) in der Scheibe (2) etwa zwei Mal so hoch wie die Druckspannung am Rand um die größte Öffnung (3L) in der Scheibe (3) ist.

9. Verbundglasscheibe nach Anspruch 7 oder 8, **dadurch gekennzeichnet, dass** die besagten verschiedenen Druckspannungen am Rand wenigstens 8 MPa auf der größten Öffnung und wenigstens 15 MPa auf der kleinsten Öffnung betragen.

10. Verbundglasscheibe nach Anspruch 7 oder 8 oder 9, **dadurch gekennzeichnet, dass** die besagten verschiedenen Druckspannungen am Rand etwa 10 und/oder 20 MPa betragen.

11. Verbundglasscheibe nach einem der vorhergehenden Ansprüche, **dadurch gekennzeichnet, dass** die Befestigungsvorrichtung (6) durch Festspannen auf der Scheibe (2) mittels Zwischenschichten aus Weichgummi (9; 13) befestigt sind.

12. Verbundglasscheibe nach einem der vorhergehenden Ansprüche, **dadurch gekennzeichnet, dass** die Haftschicht (4), die als Film in der Zone der Durchgangsöffnung ausgelegt ist, eine Hinterschneidung gegenüber dem Durchmesser der größten Öffnung (3L) hat und, im verbundenen Zustand, vorzugsweise den Innendurchmesser der größten Öffnung nicht übersteigt.

13. Verbundglasscheibe nach einem der vorhergehenden Ansprüche, **dadurch gekennzeichnet, dass** wenigstens um die Durchgangsöffnung (5) eine undurchsichtige Farbschicht vorgesehen ist, um Teile der Befestigungsvorrichtung vor Blicken zu verbergen.

14. Verbundglasscheibe nach einem der vorhergehenden Ansprüche, **dadurch gekennzeichnet, dass** mittels der Befestigungsvorrichtung (6) eine Antenne (8) auf der Verbundglasscheibe befestigt ist.

15. Verbundglasscheibe nach Anspruch 14, **dadurch gekennzeichnet, dass** die Antenne über eine Seite übersteht, die in der Montageposition der Verbundglasscheibe außen liegt.

16. Verbundglasscheibe nach einem der vorhergehenden Ansprüche, **dadurch gekennzeichnet, dass** sie wenigstens eine elektrische Schaltung für eine Antenne (8) umfasst, die mittels der Befestigungsvorrichtung (6) in die Durchgangsöffnung eingeführt ist.

17. Verbundglasscheibe nach Anspruch 16, **dadurch gekennzeichnet, dass** die gedruckte Schaltung sich auf einer Oberfläche der starren Scheibe befindet, die sich im Innern in der Schichtung befindet.

18. Verbundglasscheibe nach Anspruch 16 oder 17, **dadurch gekennzeichnet, dass** eine Schaltung in Form von drahtförmigen Leitern oder Flachkabeln in die Schichtung der Scheiben integriert ist.

19. Verbundglasscheibe nach einem der vorhergehenden Ansprüche, **dadurch gekennzeichnet, dass** wenigstens in der Zone der Durchgangsöffnung eine Beschichtung auf deren Fläche montiert ist, die zu dem Fahrgastinnenraum des Kraftfahrzeugs hin gedreht ist.

## Claims

1. A laminated glass sheet (1) with a fixing device inserted into a through-hole (5) for objects,
- the laminated glass sheet being made up of one sheet (2) and at least one other rigid sheet (3) made of glass or of plastic and of a layer (4) of adhesive connecting the two rigid sheets by bonding their surfaces together,
- the through-hole (5) consisting of two holes of different sizes (2L and 3L) in the two rigid sheets, and
- the fixing device (6) comprising at least two parts introduced into the through-hole (5), pressing against surfaces around the edge of the through-hole (5), which surfaces lie one facing the other, **characterized in that** the two parts of the fixing device (6) press from both sides against the surfaces around the edge surrounding the smaller hole made in the sheet (2), **in that** region of the walls of this smaller hole (2L) that exhibits an edge compression stress that is increased by heat treatment by comparison with the remainder of the surface of the sheet (2).

2. The laminated glass sheet as claimed in claim 1, **characterized in that** the fixing device (6) comprises a plate (7) and a screw-connection (10, 11, 12; 14) passing through the through-hole, with the use of which the plate can be clamped against one surface of the sheet.

3. The laminated glass sheet as claimed in claim 1 or 2, **characterized in that** the fixing device comprises at least one washer (11; 14) pressing at least indirectly against the edge of the smaller hole (2L).

4. The laminated glass sheet as claimed in claim 3, **characterized in that** the washer (11) can be positioned in the larger hole (3L) without either contacting or overlapping the second rigid sheet.

5. The laminated glass sheet as claimed in claim 3, **characterized in that** the washer (11) is domed and larger than the larger hole (3L) and can also press against the surface of the second rigid sheet (3).

6. The laminated glass sheet as claimed in claim 5, **characterized in that**, between the washer (11) and the rigid sheet (3) there is a layer of adhesive (15).

7. The laminated glass sheet as claimed in any one of the preceding claims, **characterized in that** the edge compression stress in the sheet (2) in the region of the through-hole is significantly higher than the edge compression stress in the second rigid sheet (3), also made of glass.

8. The laminated glass sheet as claimed in claim 7, **characterized in that** the edge compression stress around the smaller hole (2L) in the sheet (2) is approximately twice as high as the edge compression stress around the larger hole (3L) in the sheet (3).

9. The laminated glass sheet as claimed in claim 7 or 8, **characterized in that** the various aforementioned edge compression stresses are as high as at least 8 MPa for the larger hole and at least 15 MPa for the smaller hole.

10. The laminated glass sheet as claimed in claim 7 or 8 or 9, **characterized in that** the various aforementioned edge compression stresses are as high as about 10 and/or 20 MPa.

11. The laminated glass sheet as claimed in any one of the preceding claims, **characterized in that** the fixing device (6) is fixed to the sheet (2) by clamping via intermediate soft elastic layers (9, 13).

12. The laminated glass sheet as claimed in any one of the preceding claims, **characterized in that** the layer of adhesive (4) designed like a film in the region of the through-hole has a rear cutout with respect to the diameter of the larger hole (3L) and, in the laminated state, preferably does not protrude beyond the inside diameter of the larger hole.

13. The laminated glass sheet as claimed in any one of the preceding claims, **characterized in that**, at least around the through-hole (5), there is a layer of opaque color to hide the parts of the fixing device.

14. The laminated glass sheet as claimed in any one of the preceding claims, **characterized in that** the fixing device (6) is used to fix an antenna (8) to the laminated glass sheet.

15. The laminated glass sheet as claimed in claim 14, **characterized in that** the antenna protrudes from a side situated on the outside when the laminated glass sheet is in its fitted position.

16. The laminated glass sheet as claimed in any one of the preceding claims, **characterized in that** it comprises at least one electric circuit for an antenna (8) introduced by means of the fixing device (6) into the through-hole.

17. The laminated glass sheet as claimed in claim 16, **characterized in that** the printed circuit is located on one surface of the rigid sheet, situated within the lamination.

18. The laminated glass sheet as claimed in claim 16 or 17, **characterized in that** a circuit in the form of wire-like conductors or flat cables is incorporated into the lamination of the sheets.

19. The laminated glass sheet as claimed in any one of the preceding claims, **characterized in that**, at least in the region of the through-hole, a coating is mounted on the face thereof that faces toward the cabin of the motor vehicle.
